# EUROPÄISCHE PATENTSCHRIFT

(11) **EP 2 838 904 B1**
(45) Veröffentlichungstag und Bekanntmachung des Hinweises auf die Patenterteilung: **08.04.2020**
(21) Anmeldenummer: 13705796.4
(22) Anmeldetag: 25.02.2013
(51) Int. Cl.: C08L 83/08, C08G 77/388, C07F 7/18

(54) **VERFAHREN ZUR HERSTELLUNG VON (METH)ACRYLAMIDO-FUNKTIONELLEN SILANEN DURCH UMSETZUNG VON AMINOALKYL-ALKOXYSILANEN MIT ACRYLSÄUREANHYDRID**
PROCESS FOR PREPARING (METH)ACRYLAMIDO-FUNCTIONAL SILANES BY THE REACTION OF AMINOALKYL ALKOXYSILANES WITH ACRYLIC ACID ANHYDRIDE
PROCÉDÉ DE PRODUCTION DE SILANES À FONCTION (MÉTH)ACRYLAMIDO PAR LA MISE EN RÉACTION DE AMINOALKYL-ALKOXYSILANES AVEC DE L'ANHYDRIDE D'ACIDE ACRYLIQUE

(30) Priorität: 20.04.2012 DE 102012206509
(43) Veröffentlichungstag der Anmeldung: 25.02.2015
(73) Patentinhaber: Evonik Operations GmbH, 45128 Essen (DE)
(72) Erfinder: WASSMER, Christian, 79688 Hausen (DE); STANDKE, Burkhard, 79540 Lörrach (DE); SCHLOSSER, Thomas, 79594 Inzlingen (DE); KRAUSE, Regina, 79618 Rheinfelden (DE)
(74) Vertreter: Evonik Patent Association
(86) Internationale Anmeldenummer: PCT/EP2013/053674
(87) Internationale Veröffentlichungsnummer: WO 2013/156188

(56) Entgegenhaltungen:
- EP-A1- 2 277 496
- US-A- 3 900 679
- BOONLOM THAVORNYUTIKARN ET AL: "Synthesis and Characterization of UV-Curable Poly(dimethylsiloxane) Dimethacrylate", MACROMOLECULAR SYMPOSIA, Bd. 264, Nr. 1, 1. April 2008 (2008-04-01) , Seiten 144-148, XP0055064752, ISSN: 1022-1360, DOI: 10.1002/masy.200850423

## Beschreibung

Die Erfindung betrifft ein Verfahren zur Herstellung von (Meth)acrylamido-funktionellen Silanen sowie Formulierungen enthaltend diese.

Für den Einsatz von Glasfasern in Faserverbundwerkstoffen wird die Glasfaser häufig mit funktionalisierten Silanen oberflächenbehandelt. Dies geschieht gängigerweise mit Hilfe wässriger Schlichten in denen das organofunktionelle Silan gelöst wird. Abhängig von der chemischen Funktion der Silane können die gewünschten Eigenschaften wie zum Beispiel Faserstärke oder auch Schneidbarkeit (speziell für die Kurzfaserverstärkung) positiv beeinflusst werden. Die organofunktionellen Silane tragen dabei auch wesentlich zur Haftungsvermittlung zwischen der anorganischen Faser und dem organischen Harz bei. Obwohl die Applikation mittels wässriger Schlichten angestrebt wird, erfolgt die Herstellung der organofunktionellen Silane noch in organischen Lösemitteln.

So werden beispielsweise spezielle Methacryl-funktionalisierte Silane wie zum Beispiel 3-Methacryloxypropyl-trimethoxysilan in Faserverbundwerkstoffen eingesetzt, beispielhaft erwähnt seien Thermo- und Duroplaste, um die Performance des Faserverbundwerkstoffs zu erhöhen. Auch in anderen Anwendungen, wie bei der Füllstoffmodifizierung, in Beschichtungen oder in Kleb-/Dichtstoffen werden diese funktionalisierten Silane als Haftvermittler zwischen organischer und anorganischer Matrix eingesetzt. Desweiteren werden Methacryl-funktionalisierte Silane zur Herstellung von Kunststeinen eingesetzt. Dazu werden diese Silane zusammen mit ungesättigten Polyesterharze (UPE Harz) und Silizium enthaltendem Naturstein, wie Quarzsand und/oder Quarzmehl, zu entsprechenden Kunststeinplatten gefertigt.

Eine weitere Anwendung liegt in der Modifizierung von speziellen Eigenschaften wie beispielsweise der Erhöhung der Schneidbarkeit von Glasfasern. Einige der dafür genutzten Verbindungen sind Methacrylamidoalkylalkoxysilane wie (RO)ₓRSiNH(CO)C(CH₃)=CH₂ oder auch Chrom (III) Methacrylsäure Chlor Komplexe wie zum Beispiel Volan® der Fa. Du Pont (R = C1 - C6 Alkylgruppe).

In WO 00/75148 A1 (hier Vergleichsbeispiel 1) wird eine Synthese, ausgehend von Aminopropyltriethoxysilan mit einem Methacrylsäuremethylester in Gegenwart von Dibutylzinnoxid (DBTO) beschrieben. Diese Umsetzung weist eine Reihe von Nachteilen auf, zum einen wird für eine möglichst vollständige Umsetzung ein Überschuss an Methacrylsäureester von 100 % eingesetzt, der wieder abdestilliert werden muss. Damit ist die Raum-Zeit-Ausbeute schlecht. Zudem wird die Umsetzung bei hohen Temperaturen bei 165-170 °C durchgeführt, wodurch es zu Problemen aufgrund der Neigung zur Polymerisation der Acrylsäure kommt. Zur Vermeidung der Polymerisation muss ein Stabilisator eingesetzt werden. Als Katalysatoren für eine möglichst vollständige Umsetzung werden giftige, umweltgefährdende zinnorganische Verbindungen wie zum Beispiel Di-butylzinnoxid (DBTO) eingesetzt. Ein weiter Nachteil dieses Verfahrens ist die aufwändige Rektifikation des Reaktionsproduktes bei hohen Sumpftemperaturen und möglichst niedrigem Absolutdruck. Dafür ist ein weiterer Gasphasenstabilisator einzusetzen, um eine Polymerisation in der Kolonne zu vermeiden. Im Sumpf bleibt ein schwermetallhaltiger Rückstand zurück, der gesondert entsorgt werden muss. Das Destillationsprodukt ist das kommerziell erhältliche Produkt Y-5997 von der Fa. Momentive (CH₃O)ₓ(C₂H₅O)₃₋ₓSi(CH₂)₃NH(CO)C(CH₃)=CH₂.

In US Patent 3,249,461 wird die Synthese von Methacrylamidopropylmethoxysilan durch Umsetzung von Methacryloylchlorid in Gemischen wasserfreier, aromatische Kohlenwasserstoffe enthaltenden Lösemitteln mit Aminoproyltrimethoxysilan und Dinitrobenzol beschrieben. Nachteilig in diesem Prozess ist die Verwendung des Aromaten enthaltenden Lösemittelgemisches und die Freisetzung einer äquimolaren Menge an Chlorwasserstoff, der aus dem Prozess aufwändig abgetrennt werden muss. Außerdem verringert der Lösungsmittelanteil die Raum-Zeit-Ausbeute. Auch die Nutzung von Dinitrobenzol als Stabilisator ist problematisch. Eine ähnliche Synthese offenbart die EP 2 277 496 A1 in der die Umsetzung in Dichlormethan und in Gegenwart von Triethylamin und einem Stabilisator erfolgt. Das Produkt muss destillativ gereinigt werden. Boonlom Thavornyutikarn et al, Marcromolecular Symposia, Bd. 264, Nr. 1, April 2008 (2008-04-01), Seiten 144-148 offenbart die Herstellung von terminal difunktionalisierten Acrylamiden von Polydimethylsiloxanen in Toluol. US 3,900,679 offenbart die Umsetzung von äquimolaren Mengen von Acrylsäure mit Aminopropyltriemthoxysilan zu N-trimethoxysilylpropylacrylamid.

Aufgabe der vorliegenden Erfindung war die Bereitstellung umweltfreundlicher Verfahren zur Herstellung von (Meth)acrylamido-funktionellen Silanen, bei denen weniger, vorzugsweise keine organischen Lösemittel eingesetzt werden und die ohne die Verwendung toxischer Verbindungen, wie organischer Zinnverbindungen, gute Umsätze liefern. Gleichfalls sollte der Einsatz an Stabilisatoren, wie er im Stand der Technik notwendig ist, reduziert werden, bevorzugt sollte ein Verfahren gefunden werden, das ohne die Verwendung von Stabilisatoren auskommt. Eine weitere Aufgabe bestand darin ein Verfahren aufzufinden, das eine Herstellung als Eintopf-Reaktion erlaubt. Ferner sollte eine Formulierung für die so hergestellten Acrylamido-funktionellen Silane entwickelt werden. Zudem bestand die Aufgabe, ein Verfahren zu entwickeln, das ohne den Einsatz Chlor-enthaltender Verbindungen auskommt.

Gelöst wurden die Aufgaben mit einem Verfahren nach Anspruch 1 und einer Formulierung nach Anspruch 19, wobei bevorzugte Ausführungsformen in den Unteransprüchen und in der Beschreibung erläutert sind.

Ebenso wurde die Aufgabe gelöst durch eine gezielte wasserfreie, und vorzugsweise verdünnungsmittelfreie oder lösemittelfreie Umsetzung von Aminosilanen unter Temperaturkontrolle in Gegenwart von Acrylsäureanhydrid. Bevorzugte Aminosilane sind Aminoalkylalkoxysilane, bevorzugt Di- und/oder Triaminoalkyl-funktionelle Silane. Besonders bevorzugt werden 3-Aminopropyltrialkoxysilan oder N-(2-Aminoethyl)-3-aminopropyltrialkoxysilan annähernd äquimolar mit Acrylsäureanhydrid, insbesondere (Meth)acrylsäureanhydrid direkt, vorzugsweise unter Temperaturkontrolle zu den Acrylamiden umgesetzt. Als Temperaturkontrolle wird die Einhaltung eines Temperaturbereichs während der Umsetzung zwischen circa 15 bis 50 °C, vorzugsweise 20 bis 40 °C, weiter bevorzugt 20 bis 35 °C verstanden, denn in diesem Bereich kann vorzugsweise auf die Zugabe von Stabilisatoren verzichtet werden. Folglich ist Gegenstand der Erfindung ein Verfahren bestehend aus der Umsetzung von Aminoalkylalkoxysilanen mit Acrylsäureanhydrid unter Temperaturkontrolle und optionalem Entfernen der freigesetzten Acrylsäure oder deren Reaktionsprodukten. Die so hergestellten Acrylamidoalkylsilane können nachfolgend bei Bedarf direkt zu oligomeren Siloxanen oder Siloxanolen hydrolysiert und/oder kondensiert werden sowie beliebig verdünnt werden.

Ein großer Vorteil der Erfindung ist es, dass die so erhaltenen Acrylamidoalkyl-funktionellen Silane vorzugsweise ohne weitere Aufreinigung als Sumpfprodukt verwendet werden können. Damit können durch das erfindungsgemäße Verfahren Acrylamido-funktionelle Silane und Mischungen dieser, insbesondere (Meth)acrylamidoalkyl-funktionelle Alkoxysilane, als besonders wirtschaftlich und ökologisch hergestellte Produkte angeboten werden. Auf eine aufwendige, destillative Entfernung von Löse- und Verdünnungsmitteln kann verzichtet werden.

Gegenstand der Erfindung ist ein Verfahren zur Herstellung von Acrylamidoalkyl-funktionellen Silanen und Gemischen dieser, indem
- ein Aminoalkyl-funktionelles Alkoxysilan der Formel I oder ein Gemisch umfassend mindestens zwei Silane der Formel I

   (R'O)_{3-a-b}(R')ₐSi(B)_{1+b} (I),

   wobei die Gruppe-B in Formel I unabhängig einer Gruppe der Formel II

   -(CH₂)_{c}-[(NH)(CH₂)_{d}]ₑ[(NH)](CH₂)_{f}]_{g}NH₍₂₋ₕ₎ R³ₕ (II)

   entspricht, in Formel I mit R¹ unabhängig eine lineare, verzweigte oder cyclische Alkyl-Gruppe mit 1 bis 8 C-Atomen, insbesondere mit 1, 2, 3, oder 4 C-Atomen, R² unabhängig eine lineare, verzweigte oder cyclische Alkyl-Gruppe mit 1 bis 8 C-Atomen, und in Formel II mit R³ unabhängig eine lineare, verzweigte oder cyclische Alkyl-, Aryl- oder Alkylaryl-Gruppe mit 1 bis 8 C-Atomen; und in Formel I a unabhängig gleich 0 oder 1, vorzugsweise ist a gleich 0, b unabhängig gleich 0, 1 oder 2 ist, bevorzugt ist b gleich 0, in Formel II ist c unabhängig ausgewählt aus 1, 2, 3, 4, 5 und 6, d ist unabhängig ausgewählt aus 1, 2, 3, 4, 5 und 6, e ist unabhängig ausgewählt aus 0, 1, 2, 3, 4, 5 und 6, f ist unabhängig ausgewählt aus 1, 2, 3, 4, 5 und 6, g ist unabhängig ausgewählt aus 0, 1, 2, 3, 4, 5 und 6, und h ist unabhängig 0 oder 1, oder die Gruppe B in Formel I einer Gruppe der Formel III entspricht, mit j = 1, 2 oder 3 und p = 0, 1 oder 2, bevorzugt ist p ausgewählt aus 0 und 1,

   -(CH₂)ⱼ-NH₂₋ₚ(CH₂-CH₂-NH₂)ₚ (III),
- mit Acrylsäureanhydrid der Formel IV umgesetzt wird,

   (CHR⁵=CR⁴CO)₂O (IV),

   wobei R⁴ unabhängig ein Wasserstoffatom oder eine Methyl-Gruppe und R⁵ unabhängig ein Wasserstoffatom oder eine Methyl-Gruppe ist, vorzugsweise ist R⁵ ein Wasserstoffatom, und, wobei die Umsetzung bei einem Gehalt an Löse- oder Verdünnungsmittel in der Gesamtzusammensetzung von kleiner gleich 1,5 Gew.-% und in einem definierten Temperaturbereich ohne Gegenwart eines Stabilisators erfolgt,
- und optional Acrylsäure oder Reaktionsprodukte der Acrylsäure entfernt werden.

Gemäß einer bevorzugten Verfahrensvariante besteht das Verfahren aus den vorgenannten Schritten. Weiter ist es ebenso bevorzugt das Verfahren vorzugsweise im Wesentlichen ohne Gegenwart von Lösemittel bzw. Verdünnungsmittel und vorzugsweise ohne Stabilisatoren unter Temperaturkontrolle durchzuführen. Dabei gilt ein Verfahren als im Wesentlichen ohne Gegenwart von Löse- oder Verdünnungsmitteln, indem der Gehalt an Löse- oder Verdünnungsmittel während er Umsetzung oder in der Reaktionsmischung bzw. in Gesamtzusammensetzung kleiner gleich 1,5 Gew.-%, vorzugsweise kleiner gleich 0,5 Gew.-%, bevorzugt kleiner gleich 0,1 Gew.-% bis zur Nachweisgrenze liegt. Dabei gilt reaktionsbedingt freigesetzter Hydrolysealkohol aus dem Alkoxysilan nicht als Löse- oder Verdünnungsmittel.

Als wasserfreie Umsetzung gilt eine Umsetzung, wenn der Gehalt an Wasser während der Umsetzung oder in der Reaktionsmischung bzw. synonym Gesamtzusammensetzung kleiner gleich 1 Gew.-%, vorzugsweise kleiner gleich 0,5 Gew.-%, insbesondere 0,25 Gew.-%, bevorzugt kleiner gleich 0,1 Gew.-%, besonders bevorzugt kleiner gleich 0,001 Gew.-% bis 0,000001 Gew.-%. Vorzugsweise gilt eine Umsetzung als wasserfrei, wenn der Gehalt an Wasser kleiner gleich 1 Gew.-ppm, insbesondere kleiner gleich 0,1 Gew.-ppm ist.

Bei der Durchführung des Verfahrens ist es besonders bevorzugt, die Umsetzung bei einer Temperatur unterhalb 80 °C durchzuführen, insbesondere unterhalb 50 °C, vorzugsweise unterhalb 45 °C, bevorzugt unterhalb 40 °C, besonders bevorzugt unterhalb 35 °C bis größer gleich 0 °C, einschließlich aller dazwischen liegenden Temperaturwerte. Besonders bevorzugt ist ein Verfahren, indem die Umsetzung in einem definierten Temperaturbereich, vorzugsweise unterhalb 50 °C, bevorzugt unter 40 °C, ohne Gegenwart eines Stabilisators erfolgt.

Nach dem erfindungsgemäßen Verfahren werden vorzugsweise Acrylamidoalkyl-funktionelle Silane der allgemeinen Formel V oder Mischungen dieser hergestellt,

(R'O)_{3-a-b}(R²)ₐSi(C)_{1+b} (V)

mit R¹ unabhängig eine lineare, verzweigte oder cyclische Alkyl-Gruppe mit 1 bis 8 C-Atomen, insbesondere mit 1, 2, 3, oder 4 C-Atomen oder Acrylcarbonyl, wie -(CO)R⁴C=CR⁵H, und R² unabhängig eine lineare, verzweigte oder cyclische Alkyl-Gruppe mit 1 bis 8 C-Atomen ist, und die Gruppe C eine Acrylamidoalkyl-funktionelle Gruppe ist, mit a unabhängig gleich 0 oder 1, b unabhängig gleich 0, 1 oder 2, bevorzugt ist b gleich 0, wobei auch a bevorzugt gleich 0 ist. Dabei ist es ferner bevorzugt, wenn die Acrylamidoalkyl-funktionelle Gruppe C ausgewählt ist aus
-(CH₂)_{c}-[(NH)(CH₂)_{d}]ₑ[(NH)](CH₂)_{f}]_{g}NH₍₁₋ₕ₎R³ₕ-(CO)CR⁴=CHR⁵,
-(CH₂)ⱼ-NH(CH₂-CH₂-NH)-(CO)CR⁴=CHR⁵ und
-(CH₂)ⱼ-NH₂₋ₚ(CH₂-CH₂-NH-(CO)CR⁴=CHR⁵)ₚ, wobei c, d, e, f, g, h, j, p sowie R³, R⁴, R⁵ wie vor- oder nachstehend definiert sind.

Entsprechend einer besonders bevorzugten Verfahrensvariante wird die Acrylsäure und/oder deren Reaktionsprodukte mittels Destillation, Ausbildung einer löslichen oder unlöslichen Verbindung oder Chromatographie, insbesondere Flash-Chromatographie, oder einer Kombination der vorgenannten Maßnahmen entfernt. Gleichfalls bevorzugt kann durch Zugabe von Komplexbildnern die freigesetzte Acrylsäure maskiert werden.

Besonders schonend kann die Destillation unter Vakuum, beispielsweise zwischen 0,001 bis 800 mbar, in einer üblichen Destillationskolonne, Kurzwegdestillationskolonne oder einem Dünnschichtverdampfer erfolgen. Die Destillation wird bevorzugt bei einer Sumpftemperatur unterhalb von 150 °C, vorzugsweise unterhalb 120 °C durchgeführt. Weiter bevorzugt sind Sumpftemperaturen unterhalb 100 °C.

Zur Ausbildung von unlöslichen Verbindungen können generell sehr wirksam Co-Kristalle mit der Acrylsäure oder auch unlösliche Salze mit der freigesetzten Acrylsäure gebildet werden. Der Vorteil der Bildung von unlöslichen Verbindungen besteht darin, dass diese unmittelbar während der Umsetzung freigesetzte Acrylsäure binden und somit die Bildung von Umesterungsprodukten unterbunden werden können.

Aufgrund der Temperaturkontrolle und ggf. weiterer Abkühlung können unlösliche Verbindungen mittels Dekantieren oder Filtration leicht entfernt werden. Zur Bildung von löslichen oder unlöslichen Co-Kristallen, in der älteren Literatur auch als Komplexe bezeichnet, oder unlöslicher Salze können beispielhaft tertiäre-Amine und/oder Stickstoffatome enthaltende Heteroaromaten eingesetzt werden, bevorzugt sterisch gehinderte Verbindungen. Beispiele dafür sind Trialkylamine, vorzugsweise verzweigte Alkyl-Gruppen mit 1 bis 8 C-Atomen, wie Triethylamin, Tripropylamin, Tributylamin oder N-Heteroaromaten, wie Acridin, Phenazin oder Pyridin. Die tertären-Amine können jedoch auch an eine feste Phase gebunden vorliegen. Phenazin kann zwei Acrylsäuren binden.

Gemäß einer bevorzugten Alternative wird die Acrylsäure nach oder während der Umsetzung nicht entfernt, wenn Aminoalkyl-funktionelle Silane der Formel I mit sekundären und/oder tertiären Stickstoffatomen in dem Verfahren eingesetzt werden.

Gleichfalls Gegenstand der Erfindung ist ein Verfahren, indem
- in einem Schritt (I) ein Aminoalkyl-funktionelles Alkoxysilan der Formel I unter
- Zugabe einer definierten Menge Acrylsäureanhydrid der Formel IV, vorzugsweise wird das Acrylsäureanhydrid der Formel IV so zudosiert, dass die Temperatur des Gemisches nicht über 40 °C, insbesondere nicht über 40 °C ansteigt, vorzugsweise wird gekühlt, und unter Temperaturkontrolle, vorzugsweise unterhalb 50 °C, bevorzugt unterhalb 40 °C, umgesetzt, und
- im Schritt (II) Acrylsäure entfernt wird. Die Sumpftemperatur kann bei der Umsetzung mit (Meth)acrylsäureanhydrid durch die Zutropf-Geschwindigkeit von (Meth)acrylsäureanhydrid gesteuert werden. Durch eine Kühlung des Reaktors kann eine schnellere Zugabe von (Meth)acrylsäure erreicht werden.

Weiter kann es bevorzugt sein, wenn gemäß einer Verfahrensvariante die Umsetzung in Gegenwart eines wasserfreien aprotischen oder organischen, protischen Lösemittels bei einer Temperatur unterhalb 40 °C erfolgt, insbesondere ohne Anwesenheit eines Stabilisators. Ebenso kann es bevorzugt sein, die Umsetzung in Gegenwart eines wasserfreien aprotischen oder organischen protischen Lösemittels oder Lösemittelgemisches durchzuführen, wobei mindestens ein Lösemittel mit der Acrylsäure unlösliche Verbindungen oder stabile Komplexe bildet.

Generell können die Lösemittel ausgewählt sein aus Ketonen, sek.-Aminen, tert.-Aminen, Stickstoff enthaltenden Heteroaromaten, DMFA, insbesondere Tiralkylamine, wie Triethylamin, Tributylamin, Piperidin, wobei sterisch gehinderte Amine bevorzugt sind. Der Komplexbildner wird vorzugsweise annähernd äquimolar oder im Überschuss zur freigesetzten Acrylsäure eingesetzt. Als wasserfreies Lösemittel gilt insbesondere ein Lösemittel, dessen Gehalt an Wasser kleiner gleich 1 Gew.-% insbesondere kleiner gleich 0,5 Gew.-%, bevorzugt kleiner gleich 0,1 Gew.-%, besonders bevorzugt kleiner gleich 0,01 Gew.-% bis 0,00001 Gew.-% ist. Vorzugsweise gilt ein Lösemittel als wasserfrei mit einem Gehalt an Wasser von unter 1 Gew.-ppm.

Es wurde festgestellt, dass bei der direkten Umsetzung von Aminosilanen mit Acrylsäureanhydrid auch die Umesterungsprodukte auftreten. Deren Bildung kann durch die Temperaturkontrolle oder die Zugabe von Komplexbildnern bzw. Verbindungen, die die Acrylsäure abfangen, gesteuert werden.

Der Wirkstoffgehalt der hergestellten Silane beträgt vorzugsweise bis zu 100 Gew.-%, insbesondere bereits als Sumpfprodukt. Ferner sind sie bevorzugt herstellbedingt wasser- und lösemittelfrei bzw. verdünnungsmittelfrei. Je nach Verfahrensführung können die Silane einen gewissen Gehalt an Silanolen oder oligomeren Siloxan(ol)en aufweisen. Ebenso bevorzugt können Silane erhalten werden, die einen geringen Gehalt an Verdünnungsmittel von bis zu 5 Gew.-% aufweisen. In der späteren Anwendung kann der Wirkstoffgehalt der Silane beliebig eingestellt werden.

Erfindungsgemäß können grundsätzlich alle Aminoalkoxysilane auch als Gemisch zur Herstellung der Acrylamido-funktionellen Silane eingesetzt werden. Ein Vorteil von Di- und Triaminosilanen liegt darin, dass sie eine primäre und mindestens eine sekundäre Aminogruppe aufweisen, die in der Lage ist, die bei der Reaktion freigesetzte (Meth)acrylsäure unter Bildung eines entsprechenden Salzes (Aminohydromethacrylat) zu neutralisieren. Das Aminohydro-(meth)acrylat kann basisch gespalten werden. Als Basen eignen sich vorzugsweise basische Alkalisalze wie NaOH oder KOH, bevorzugt Alkalialkoxide wie NaOR oder KOR, bevorzugt für R = Alkyl- vorzugsweise Methyl- und besonders bevorzugt ist Kaliummethylat. Bei Einsatz von Kaliumethylat wird die (Meth)acrylsäure als Kaliummethacrylat gefällt und kann leicht durch Filtration entfernt werden.

Bevorzugte Aminoalkyl-funktionelle Alkoxysilane entsprechen der Formel I, wobei die Gruppe-B in Formel I unabhängig einer Gruppe der Formel II entspricht, mit R¹ unabhängig eine lineare, verzweigte oder cyclische Alkyl-Gruppe mit 1 bis 8 C-Atomen, insbesondere mit 1, 2, 3, oder 4 C-Atomen, bevorzugt Methyl, Ethyl oder Propyl, und R² unabhängig eine lineare, verzweigte oder cyclische Alkyl-Gruppe mit 1 bis 8 C-Atomen, insbesondere Methyl, Ethyl, Propyl, n-Butyl, iso-Butyl, tert.-Butyl, Pentyl, Hexyl, Heptyl oder Octyl, und in Formel II mit R³ unabhängig eine lineare, verzweigte oder cyclische Alkyl-, Aryl- oder Alkylaryl-Gruppe mit 1 bis 8 C-Atomen, insbesondere Methyl, Ethyl, Butyl oder Benzyl, wobei h gleich 0 besonders bevorzugt ist, und in Formel I ist a unabhängig gleich 0 oder 1, b unabhängig gleich 0, 1 oder 2, bevorzugt ist b gleich 0, und in Formel II ist c unabhängig ausgewählt aus 1, 2, 3, 4, 5 und 6, d ist unabhängig ausgewählt aus 1, 2, 3, 4, 5 und 6, e ist unabhängig ausgewählt aus 0, 1, 2, 3, 4, 5 und 6, f ist unabhängig ausgewählt aus 1, 2, 3, 4, 5 und 6, g ist unabhängig ausgewählt aus 0, 1, 2, 3, 4, 5 und 6, und h ist unabhängig 0 oder 1, alternativ bevorzugt sind e = g = 0 oder 1, und d = f = 2 oder 3 und h = 0 mit c=3 und b = 0 und a = 0, besonders bevorzugte Kombinationen sind mit R¹ gleich Methyl oder Ethyl a = 0 und b = 0 mit c = 3 und g, e und h jeweils gleich 0, alternativ gleichfalls bevorzugt sind a = 0, b = 0, c = 3, e = 1, d = 1, 2 oder 3, vorzugsweise ist d = 2, und g = 0, h = 0, für Diamino-funktionelle Silane, oder die Gruppe B entspricht der Formel III mit j = 1, 2 oder 3 und p = 0, 1 oder 2, bevorzugt ist p ausgewählt aus 1 und 2, zweckmäßig kann auch p = 0 sein.

Generell ist es gemäß einer Verfahrensvariante bevorzugt, wenn das Aminoalkyl-funktionelle Alkoxysilan einem Diaminoalkyl-funktionellen oder einem Triaminoalkyl-funktionellen Silan, vorzugsweise einem Diaminoalkyl-funktionellen oder einem Triaminoalkyl-funktionellen Alkoxysilan der Formel I entspricht. Ebenso besonders bevorzugt sind Gemische der vorgenannten Silane, wie Aminosilan mit Diaminosilan oder auch Aminosilan mit Triaminosilan oder Diaminosilan mit Triaminosilan sowie auch Gemische mit drei oder mehr verschiedenen Aminosilanen der Formel I.

Als Acrylsäureanhydrid werden vorzugsweise (Methy)acrylsäure oder Acrylsäureanhydrid eingesetzt, besonders bevorzugt gemäß der Formel IV

(CHR⁵=CR⁴CO)₂O (IV),

wobei R⁴ unabhängig ein Wasserstoffatom oder eine Methyl-Gruppe und R⁵ unabhängig ein Wasserstoffatom oder eine Methyl-Gruppe ist, vorzugsweise ist R⁵ ein Wasserstoffatom. Bevorzugt sind (CH₂=C(CH₃)CO)₂O und (CH₂=CHCO)₂O.

Erfindungsgemäß ist es nicht notwendig, die nach der Umsetzung erhaltenen Acrylamido-funktionellen Silane weiter aufzureinigen, optional kann die Acrylsäure entfernt oder maskiert werden, insbesondere ist eine aufwendige destillative Aufarbeitung, wie Rektifikation, der Acrylamido-funktionellen Silane nicht notwendig, da vorzugsweise direkt die Sumpfprodukte verwendet werden können. Die erfindungsgemäßen Sumpfprodukte bedürfen keiner weiteren Aufreinigung, da keine störenden Katalysatoren oder störenden Stabilisatoren in den Sumpfprodukten enthalten sind. Denn ein besonderer Vorteil des erfindungsgemäßen Verfahrens ist der Verzicht auf Stabilisatoren und Gasphasenstabilisatoren, wie es im Stand der Technik notwendig ist. Folglich ist das erfindungsgemäße Verfahren viel wirtschaftlicher und kann mit umweltverträglicheren Ausgangssubstanzen durchgeführt werden als bekannte Verfahren.

Gemäß bevorzugten Ausführungsformen wird das Verfahren vorzugsweise mit einem Aminoalkyl-funktionellen Alkoxysilan der Formel I durchgeführt,
a) mit R¹ unabhängig gleich Methyl oder Ethyl und mit a = 0 und b = 0 mit c = 1, 2 oder 3 und mit der Gruppe-B gemäß Formel II mit g = 0 und e = 1 und h = 0, und d = 2, oder
b) mit R¹ unabhängig gleich Methyl oder Ethyl und mit a = 0 und b = 0 mit c = 3 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, und d = 2 und mit g = 0, h = 0 oder mit der Gruppe-B gemäß Formel II mit e = g = 0 oder 1, und d = f = 2 oder 3 und h = 0 mit c = 3 oder mit der Gruppe-B gemäß Formel III mit j = 3 und p gleich 1 oder 2, oder
c) mit R¹ unabhängig gleich Methyl oder Ethyl und mit a = 0 und b = 0 mit c = 2 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, und d = 2 und mit g = 0, h = 0 oder mit der Gruppe-B gemäß Formel II mit e = g = 0 oder 1, und d = f = 2 oder 3 und h = 0 mit c = 2 oder mit der Gruppe-B gemäß Formel III mit j = 3 und p gleich 1 oder 2, oder
d) mit R¹ unabhängig gleich Methyl oder Ethyl und mit a = 0 und b = 0 mit c = 1 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1 und d = 2 und mit g = 0, h = 0 oder mit der Gruppe-B gemäß Formel II mit e = g = 0 oder 1, und d = f = 2 oder 3 und h = 0 mit c = 1 oder mit der Gruppe-B gemäß Formel III mit j = 3 und p gleich 1 oder 2.

Ebenfalls ist es bevorzugt, wenn das Verfahren vorzugsweise mit einem Aminoalkyl-funktionellen Alkoxysilan der allgemeinen Formel I ausgewählt aus den nachfolgenden Silanen durchgeführt wird: 3-Aminopropyltrimethoxysilan, 3-Aminopropyltriethoxysilan, 3-Aminopropylmethyldimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-aminomethyltriethoxysilan, N-n-Butyl-1-aminomethylmethyldimethoxysilan, N-n-Butyl-1-aminomethyltrimethoxysilan, N-n-Butyl-1-aminomethylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan und (1-Aminoethyamino)-methyltriethoxysilan, wobei insbesondere Di- und oder Triaminoalkoxysilane bevorzugt sind. Besonders bevorzugt sind Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan.

Vorzugsweise wird in dem Verfahren das molare Verhältnis der Stickstoffatome der Aminoalkyl-funktionellen Silane zum molaren Verhältnis der aus dem Acrylsäureanhydrid der Formel I freigesetzten CHR⁵=CR⁴(CO)- Acrylcarbonyl-Funktion im Bereich von 1 zu 5 bis 5 zu 1 eingestellt, insbesondere liegt es bei 1 zu 2 bis 2 zu 1, bevorzugt 1 zu 1,5 bis 1,5 zu 1, besonders bevorzugt um 1 zu 1 mit einer Schwankungsbreite von plus/minus 0,5, vorzugsweise plus/minus 0,2. Alternativ kann es besonders bevorzugt sein, ein Diaminoalkyl-funktionelles Silan äquimolar mit Acrylsäureanhydrid der Formel I einzusetzen. Dabei kann die sekundäre Aminofunktion die freie Acrylsäure neutralisieren und zu einem Aminohydromethacrylat abreagieren, das nachfolgend basisch gespalten werden kann.

Gegenstand der Erfindung ist auch eine Formulierung, umfassend ein Verfahrensprodukt sowie mindestens einen weiteren Formulierungsbestandteil ausgewählt aus Hilfsstoff, Polymer, Wasser, Verdünnungsmittel, Additiv, Pigment, Füllstoff, Säure, Base oder Puffer. Als Polymere können in der Formulierung vorzugsweise silanterminierte Polyurethane eingesetzt werden. Weitere Formulierungsbestandteile können Weichmacher, Katalysatoren, Vernetzer und/oder Wasserfänger sein. Gleichfalls ist der Zusatz von üblichen Stabilisatoren zur Erhöhung der Lagerstabilität möglich.

Die erfindungsgemäß hergestellten Acrylamidoalkyl-funktionellen Silane können vorzugsweise verwendet werden als Haftvermittler, zur Funktionalisierung von Glas, insbesondere zur Funktionalisierung von Glasfasern, zur Modifizierung von Füllstoffen, Pigmenten, organischer Oberflächen und/oder anorganischer Oberflächen, insbesondere als Füllstoffbeschichtung, wobei die Füllstoffe anorganische oder organische Füllstoffe sein können, Beschichtung von Pigmenten, Beschichtung von organischen oder anorganischen Oberflächen, in Formulierungen, in Zahnabformmassen, in Dentalkunststoffmassen, als Additiv in Polymeren, in Klebstoffen, in Dichtstoffen, in Faserverbundwerkstoffen, zusammen mit Monomeren oder Polymeren, insbesondere Thermoplasten, Duroplasten, Elastomeren, zur Funktionalisierung von Polymeren, zur Einstellung des Eigenschaftsprofils von Polymeren, zur Herstellung von Masterbatches, als Additiv in Harzsystemen, insbesondere in ungesättigten organischen Harzsystemen, wie Alkydharze. Wie zur Herstellung von Kunststeinen. Besonders bevorzugt ist die Verwendung zur Verknüpfung/Anbindung anorganischer Materialien mit organischen Materialien, insbesondere ungesättigten organischen Materialien. Ebenso können die Silane zur Herstellung von Masterbatches eingesetzt werden.

Zusammenfassend ist festzuhalten, dass sich das erfindungsgemäße Verfahren dadurch auszeichnet, dass es besonders umweltfreundlich und mit sehr guter Raum-Zeit-Ausbeute betrieben werden kann, denn es beruht auf der puren Umsetzung der Aminoalkylsilane mit Acrylsäureanhydrid als Eintopfverfahren und kommt ohne die Verwendung von Schwermetallen, wie Chrom, sowie ohne Verwendung von Zinnverbindungen aus. Darüber hinaus kann auf die Verwendung von Chlor-enthaltenden Verbindungen verzichtet werden.

Die folgenden Beispiele erläutern das erfindungsgemäße Verfahren näher, ohne die Erfindung auf diese Beispiele zu beschränken.

### Bestimmungsmethoden:

Der Alkoholgehalt nach Hydrolyse wird gaschromatographisch bestimmt (Gew.-%). SiO₂-Gehalt von organischen Siliciumverbindungen: Wird nach dem Fachmann bekannten Verfahren bestimmt, wie bspw. Oxidieren der organischen Bestandteile. Nachfolgend Veraschung, mit Flußsäure abrauchen und Bestimmung der Gewichtsdifferenz (% = Gew.-%). Bestimmung von Stickstoff: Nach einer dem Fachmann bekannten Methode, beispielsweise nach Kjedahl.

### Beispiel 1:

In einer 500 ml Rührapparatur mit Destillationsbrücke wurden 88,81 g Aminopropyltriethoxysilan (0,401 mol) und 34,80 g Aminopropyltrimethoxysilan (AMMO) (0,194 mol) vorgelegt. Unter Kühlen mittels Eisbad wurden innerhalb von 1 Stunde 92,61 g Methacrylsäureanhydrid (0,60 mol) zugetropft. Dabei stieg die Sumpftemperatur auf max. 32,0°C. Anschließend wurde bei einem Absolutdruck von 6 mbar bis zu einer Sumpftemperatur von 115 °C ein Teil der freien Methacrylsäure abdestilliert. Es wurden 175,8 g leicht gelbliches Sumpfprodukt erhalten.

**Tabelle 1 : Analysenergebnisse vom Sumpfprodukt aus Beispiel 1**

| Bestimmung | Methode | Ergebnis |
|---|---|---|
| Gesamt-N [%] | s.o. | 4,4 |
| SiO₂ Gehalt [%] | s.o. | 19,4 |
| pH | DIN ISO 4925 | 5,5 |
| Viskosität [mPas] | DIN 53015 | 447 |
| ¹H- und ¹³C-NMR | Quantitative Auswertung ergibt: | |
| | - 43mol% Methacrylamidopropylmethoxdiethoxysilan | |
| | - 57mol% Methacrylamidopropyldialkoxycaboxysilan* | |
| | *Carboxy = Methacrylsäureester | |
| ²⁹Si-N MR | Oligomere sind nicht nachweisbar | |

### Vergleichsbeispiel 1 (Vergleichsbeispiel gemäß WO 00/75148 A1):

In einer 1 l Rührapparatur mit Destillationsbrücke wurden 398,07 g Aminopropyltriethoxysilan (1,8 mol) vorgelegt, 1,99 g Dibutylzinnoxid, 0,037 g lonol und 0,18 g 4,4'-Thiobis(6-Tertiärbutyl-m-cresol) zugerührt. Anschließend wurde innerhalb von 2 Stunden eine Mischung aus 360,35 g ein Methylmethacrylat (3,60 mol) und 5,41 g Dipropylamin bei einer Sumpftemperatur von 152,8 °C bis 165,5 °C zudosiert. Nach 0,3 Stunden Reaktionszeit wurde bei einer Kopftemperatur von 76,5 °C bis 80,4 °C ein Gemisch aus Methanol, Ethanol, Methylmethacrylat und Ethylmethacrylat abgenommen. Nach 2,5 Stunden Destillationszeit wurden bei einem Absolutdruck von 316 mbar bis < 1 mbar und einer Sumpftemperatur bis 157,2 °C Restmengen an Leichtsieder aus dem Sumpfprodukt entfernt. Insgesamt wurden 287,8 g Destillat abgenommen. Als Sumpfprodukt wurden 461,35 g leicht gelbliche niedrigviskose Flüssigkeit erhalten. Ausweislich der Offenbarung der WO 00/75148 A1 wird das Methacryl-Rohprodukt im Hochvakuum destilliert. Hierauf wurde im vorliegenden Beispiel verzichtet.

**Tabelle 2: Analysenergebnisse aus Vergleichsbeispiel 1**

| Bestimmung | Methode | Ergebnis |
|---|---|---|
| Gesamt-N [%] | s.o. | 5,0 |
| SiO₂ Gehalt [%] | s.o. | 22,0 |
| pH | DIN ISO 4925 | 9,7 |
| Viskosität [mPas] | DIN 53015 | 50,1 |

In Tabelle 3 sind die Analysenergebnisse des kommerziell erhältlichen Y-5997 wiedergegeben.

**Tabelle 3: Analysenergebnisse von Y-5997**

| Bestimmung | Methode | Ergebnis |
|---|---|---|
| Gesamt-N [%] | s.o | 4,9 |
| SiO₂ Gehalt [%] | s.o | 21,9 |
| pH | DIN ISO 4925 | 9,0 |
| Viskosität [mPas] | DIN 53015 | 35,0 |
| ¹H- und ¹³C-NMR | Zeigen das Trialkoxysilylpropylmethacrylat | |
| ¹³C-NMR | 66,4 mol% SiOC₂H₅ | |
| | 1,0 mol% Ethanol | |
| | 31,9 mol% SiOCH₃ | |
| | 0,7 mol% Methanol | |

## Patentansprüche

1. Verfahren zur Herstellung von Acrylamidoalkyl-funktionellen Silanen und Gemischen dieser, indem
- ein Aminoalkyl-funktionelles Alkoxysilan der Formel I oder ein Gemisch umfassend mindestens zwei Silane der Formel I
(R¹O)_{3-a-b}(R²)ₐSi(B)_{1+b} (I),
wobei die Gruppe-B in Formel I unabhängig einer Gruppe der Formel II
-(CH₂)_{c}-[(NH)(CH₂)_{d}]ₑ[(NH)(CH₂)_{f}]_{g}NH₍₂₋ₕ₎ R³ₕ (II)
entspricht, in Formel I mit R¹ unabhängig eine lineare, verzweigte oder cyclische Alkyl-Gruppe mit 1 bis 8 C-Atomen, insbesondere mit 1, 2, 3 oder 4 C-Atomen, R² unabhängig eine lineare, verzweigte oder cyclische Alkyl-Gruppe mit 1 bis 8 C-Atomen ist, und in Formel II mit R³ unabhängig eine lineare, verzweigte oder cyclische Alkyl-, Aryl- oder Alkylaryl-Gruppe mit 1 bis 8 C-Atomen, und in Formel I a unabhängig gleich 0 oder 1, b unabhängig gleich 0, 1 oder 2 ist, in Formel II ist c unabhängig ausgewählt aus 1, 2, 3, 4, 5 und 6, d ist unabhängig ausgewählt aus 1, 2, 3, 4, 5 und 6, e ist unabhängig ausgewählt aus 0, 1, 2, 3, 4, 5 und 6, f ist unabhängig ausgewählt aus 1, 2, 3, 4, 5 und 6, g ist unabhängig ausgewählt aus 0, 1, 2, 3, 4, 5 und 6, und h ist unabhängig 0 oder 1, oder die Gruppe B in Formel I entspricht einer Gruppe der Formel III
-(CH₂)ⱼ-NH₂₋ₚ(CH₂-CH₂-NH₂)ₚ (III)
mit j = 1, 2 oder 3 und p = 0, 1 oder 2,
- mit Acrylsäureanhydrid der Formel IV
(CHR⁵=CR⁴CO)₂O (IV),
wobei R⁴ unabhängig ein Wasserstoffatom oder eine Methyl-Gruppe und R⁵ unabhängig ein Wasserstoffatom oder eine Methyl-Gruppe ist,
umgesetzt wird und, wobei die Umsetzung bei einem Gehalt an Löse- oder Verdünnungsmittel in der Gesamtzusammensetzung von kleiner gleich 1,5 Gew.-% und in einem definierten Temperaturbereich ohne Gegenwart eines Stabilisators erfolgt,
- und optional Acrylsäure und/oder Reaktionsprodukte der Acrylsäure entfernt werden.

2. Verfahren nach Anspruch 1, **dadurch gekennzeichnet, dass** die Umsetzung bei einer Temperatur unterhalb 80 °C erfolgt, insbesondere unterhalb 50 °C, vorzugsweise unterhalb 45 °C, bevorzugt unterhalb 40 °C, besonders bevorzugt unterhalb 35 °C.

3. Verfahren nach Anspruch 1 oder 2, **dadurch gekennzeichnet, dass** die Umsetzung bei einem Gehalt an Löse- oder Verdünnungsmittel in der Gesamtzusammensetzung kleiner gleich 0,5 Gew.-%, bevorzugt kleiner gleich 0,1 Gew.-% erfolgt.

4. Verfahren nach einem der Ansprüche 1 bis 3, **dadurch gekennzeichnet, dass** die Umsetzung in einem definierten Temperaturbereich unterhalb 50 °C, ohne Gegenwart eines Stabilisators erfolgt.

5. Verfahren nach einem der Ansprüche 1 bis 4, **dadurch gekennzeichnet, dass** die Umsetzung in Gegenwart eines wasserfreien aprotischen oder organischen, protischen Lösemittels bei einer Temperatur unterhalb 40 °C erfolgt.

6. Verfahren nach Anspruch 1 **gekennzeichnet durch** ein Aminoalkyl-funktionelles Alkoxysilan der Formel I mit R¹ unabhängig gleich Methyl oder Ethyl und mit a = 0 und b = 0 mit c = 1, 2 oder 3 und mit der Gruppe-B gemäß Formel II mit g = 0 und e = 1 und h = 0, d = 2.

7. Verfahren nach Anspruch 1 **gekennzeichnet durch** ein Aminoalkyl-funktionelles Alkoxysilan der Formel I mit R¹ unabhängig gleich Methyl oder Ethyl und mit a = 0 und b = 0 mit c = 3 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 2 und mit g = 0, h = 0 oder mit der Gruppe-B gemäß Formel II mit e = g = 0 oder 1, und d = f = 2 oder 3 und h = 0 mit c = 3 oder mit der Gruppe-B gemäß Formel III mit j = 3 und p gleich 1 oder 2.

8. Verfahren nach Anspruch 1 **gekennzeichnet durch** ein Aminoalkyl-funktionelles Alkoxysilan der Formel I mit R¹ unabhängig gleich Methyl oder Ethyl und mit a = 0 und b = 0 mit c = 2 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1,
d = 2 und mit g = 0, h = 0 oder mit der Gruppe-B gemäß Formel II mit e = g = 0 oder 1, und d = f = 2 oder 3 und h = 0 mit c = 2 oder mit der Gruppe-B gemäß Formel III mit j = 3 und p gleich 1 oder 2.

9. Verfahren nach Anspruch 1 **gekennzeichnet durch** ein Aminoalkyl-funktionelles Alkoxysilan der Formel I mit R¹ unabhängig gleich Methyl oder Ethyl und mit a = 0 und b = 0 mit c = 1 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1,
d = = 2 und mit g = 0, h = 0 oder mit der Gruppe-B gemäß Formel II mit e = g = 0 oder 1, und d = f = 2 oder 3 und h = 0 mit c = 1 oder mit der Gruppe-B gemäß Formel III mit j = 3 und p gleich 1 oder 2.

10. Verfahren nach Anspruch 1 oder 6 bis 9, **dadurch gekennzeichnet, dass** das Aminoalkyl-funktionelle Silan der Formel I ausgewählt ist aus 3-Aminopropyltrimethoxysilan, 3-Aminopropyltriethoxysilan, 3-Aminopropylmethyldimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyltrimethoxysilan, N-n-Butyl-1-aminomethylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan und (1-Aminoethylamino)-methyltriethoxysilan, wobei insbesondere Di- und oder Triaminoalkoxysilane bevorzugt sind.

11. Verfahren nach einem der Ansprüche 1 bis 10, **dadurch gekennzeichnet, dass** das Acrylsäureanhydrid der Formel IV das Methacrylsäureanhydrid oder das (unsubstituierte) Acrylsäureanhydrid ist.

12. Verfahren nach einem der Ansprüche 1 bis 11, **dadurch gekennzeichnet, dass** das molare Verhältnis der Stickstoffatome der Aminoalkyl-funktionellen Alkoxysilane der Formel I zum molaren Verhältnis der aus dem Acrylsäureanhydrid der Formel IV freigesetzten Acrylcarbonyl-Funktion im Bereich von 1 zu 5 bis 5 zu 1 liegt, insbesondere 1 zu 2 bis 2 zu 1, bevorzugt 1 zu 1,5 bis 1,5 zu 1, besonders bevorzugt um 1 zu 1 mit einer Schwankungsbreite von plus/minus 0,5, vorzugsweise 0,2.

13. Verfahren nach einem der Ansprüche 1 bis 12, **dadurch gekennzeichnet, dass** bei Umsetzung von Aminoalkyl-funktionellen Silanen der Formel I mit sekundären und/oder tertiären Stickstoffatomen die Acrylsäure nicht entfernt wird.

14. Verfahren nach einem der Ansprüche 1 bis 13, indem
- in einem Schritt (I) ein Aminoalkyl-funktionelles Alkoxysilan der Formel I unter
- Zugabe einer definierten Menge Acrylsäureanhydrid der Formel IV und
- Temperaturkontrolle umgesetzt wird und
- im Schritt (II) Acrylsäure entfernt wird.

15. Verfahren nach einem der Ansprüche 1 bis 14, **dadurch gekennzeichnet, dass** die Acrylsäure mittels Destillation, Ausbildung einer unlöslichen Verbindung oder Chromatographie, insbesondere Flash-Chromatographie, entfernt wird oder durch Zugabe eines Komplexbildners maskiert wird.

16. Verfahren nach einem der Ansprüche 1 bis 15, **dadurch gekennzeichnet, dass** die Umsetzung in Gegenwart eines wasserfreien, aprotischen oder organischen, protischen Lösemittels oder Lösemittelgemisches erfolgt, wobei mindestens ein Lösemittel mit der Acrylsäure unlösliche Verbindungen bildet.

17. Verfahren nach einem der Ansprüche 1 bis 16, **dadurch gekennzeichnet, dass** die Acrylamidoalkyl-funktionellen Silane der allgemeinen Formel V entsprechen,
(R¹O)_{3-a-b}(R²)ₐSi(C)_{1+b} (V),
wobei R¹ unabhängig eine lineare, verzweigte oder cyclische Alkyl-Gruppe mit 1 bis 8 C-Atomen, insbesondere mit 1, 2, 3, oder 4 C-Atomen oder Acrylcarbonyl, wie -(CO)R⁴C=CR⁵H, ist, R² unabhängig eine lineare, verzweigte oder cyclische Alkyl-Gruppe mit 1 bis 8 C-Atomen ist, und die Gruppe C eine Acrylamidoalkyl- funktionelle Gruppe ist, mit a unabhängig gleich 0 oder 1, b unabhängig gleich 0, 1 oder 2, bevorzugt ist b gleich 0.

18. Verfahren nach Anspruch 17, **dadurch gekennzeichnet, dass** die Gruppe C ausgewählt ist aus
-(CH₂)_{c}-[(NH)(CH₂)_{d}]ₑ[(NH) (CH₂)_{f}]_{g}NH₍₁₋ₕ₎R³ₕ-(CO)CR⁴=CHR⁵,
-(CH₂)ⱼ-NH(CH₂-CH₂-NH)-(CO)CR⁴=CHR⁵ und
-(CH₂)ⱼ-NH₂₋ₚ(CH₂-CH₂-NH-(CO)CR⁴=CHR⁵)ₚ,
wobei c, d, e, f, g, h, j, p sowie R³, R⁴, R⁵ wie vorstehend definiert sind.

19. Formulierung umfassend ein Verfahrensprodukt nach einem der Ansprüche 1 bis 18 sowie mindestens einen weiteren Formulierungsbestandteil ausgewählt aus Hilfsstoff, Polymer, insbesondere silanterminiertem Polyurethan, Verdünnungsmittel, Additiv, Pigment, Säure, Base oder Puffer.

## Claims

1. Process for preparing acrylamidoalkyl-functional silanes and mixtures of these, by
- reacting an aminoalkyl-functional alkoxysilane of the formula I or a mixture comprising at least two silanes of the formula I
(R¹O)_{3-a-b}(R²)ₐSi(B)_{1+b} (I)
where the group B in formula I independently corresponds to a group of the formula II
-(CH₂)_{c}-[(NH) (CH₂)_{d}]ₑ[(NH) (CH₂)_{f}]_{g}NH₍₂₋ₕ₎R³ₕ (II)
in formula I with R¹ independently a linear, branched or cyclic alkyl group having 1 to 8 carbon atoms, especially having 1, 2, 3 or 4 carbon atoms, R² independently a linear, branched or cyclic alkyl group having 1 to 8 carbon atoms, and in formula II with R³ independently a linear, branched or cyclic alkyl, aryl or alkylaryl group having 1 to 8 carbon atoms, and in formula I a is independently 0 or 1, b is independently 0, 1 or 2, in formula II c is independently selected from 1, 2, 3, 4, 5 and 6, d is independently selected from 1, 2, 3, 4, 5 and 6, e is independently selected from 0, 1, 2, 3, 4, 5 and 6, f is independently selected from 1, 2, 3, 4, 5 and 6, g is independently selected from 0, 1, 2, 3, 4, 5 and 6, and h is independently 0 or 1, or the group B in formula I corresponds to a group of the formula III
-(CH₂)ⱼ-NH₂₋ₚ(CH₂-CH₂-NH₂)ₚ (III)
with j = 1, 2 or 3 and p = 0, 1 or 2,
- with acrylic anhydride of the formula IV
(CHR⁵=CR⁴CO)₂O (IV)
where R⁴ is independently a hydrogen atom or a methyl group and R⁵ is independently a hydrogen atom or a methyl group, and where the reaction is effected with a solvent or diluent content in the overall composition of less than or equal to 1.5% by weight and within a defined temperature range in the absence of a stabilizer,
- and acrylic acid and/or reaction products of acrylic acid are optionally removed.

2. Process according to Claim 1, **characterized in that** the reaction is effected at a temperature below 80°C, especially below 50°C, preferably below 45°C, more preferably below 40°C, especially preferably below 35°C.

3. Process according to Claim 1 or 2, **characterized in that** the reaction is effected with a solvent or diluent content in the overall composition of less than or equal to 0.5% by weight, preferably less than or equal to 0.1% by weight.

4. Process according to any of Claims 1 to 3, **characterized in that** the reaction is effected within a defined temperature range below 50°C, in the absence of a stabilizer.

5. Process according to any of Claims 1 to 4, **characterized in that** the reaction is effected in the presence of an anhydrous aprotic or organic protic solvent at a temperature below 40°C.

6. Process according to Claim 1, **characterized by** an aminoalkyl-functional alkoxysilane of the formula I with R¹ independently methyl or ethyl and with a = 0 and b = 0 with c = 1, 2 or 3 and with the group B of the formula II with g = 0 and e = 1 and h = 0, d = 2.

7. Process according to Claim 1, **characterized by** an aminoalkyl-functional alkoxysilane of the formula I with R¹ independently methyl or ethyl and with a = 0 and b = 0 with c = 3 and with the group B of the formula II with g, e and h each 0 or, in an alternative, with a = 0, b = 0, c = 3, and with the group B of the formula II with e = 1, d = 2 and with g = 0, h = 0 or with the group B of the formula II with e = g = 0 or 1, and d = f = 2 or 3 and h = 0 with c = 3 or with the group B of the formula III with j = 3 and p = 1 or 2.

8. Process according to Claim 1, **characterized by** an aminoalkyl-functional alkoxysilane of the formula I with R¹ independently methyl or ethyl and with a = 0 and b = 0 with c = 2 and with the group B of the formula II with g, e and h each 0 or, in an alternative, with a = 0, b = 0, c = 3, and with the group B of the formula II with e = 1, d = 2 and with g = 0, h = 0 or with the group B of the formula II with e = g = 0 or 1, and d = f = 2 or 3 and h = 0 with c = 2 or with the group B of the formula III with j = 3 and p = 1 or 2.

9. Process according to Claim 1, **characterized by** an aminoalkyl-functional alkoxysilane of the formula I with R¹ independently methyl or ethyl and with a = 0 and b = 0 with c = 1 and with the group B of the formula II with g, e and h each 0 or, in an alternative, with a = 0, b = 0, c = 3, and with the group B of the formula II with e = 1, d = 2 and with g = 0, h = 0 or with the group B of the formula II with e = g = 0 or 1, and d = f = 2 or 3 and h = 0 with c = 1 or with the group B of the formula III with j = 3 and p = 1 or 2.

10. Process according to Claim 1 or 6 to 9, **characterized in that** the aminoalkyl-functional silane of the formula I is selected from 3-aminopropyltrimethoxysilane, 3-aminopropyltriethoxysilane, 3-aminopropylmethyldimethoxysilane, 3-aminopropylmethyldiethoxysilane, 1-aminomethyltrimethoxysilane, 1-aminomethyltriethoxysilane, 2-aminoethyltrimethoxysilane, 2-aminoethyltriethoxysilane, 3-aminoisobutyltrimethoxysilane, 3-aminoisobutyltriethoxysilane, N-n-butyl-3-aminopropyltriethoxysilane, N-n-butyl-3-aminopropylmethyldiethoxysilane, N-n-butyl-3-aminopropyltrimethoxysilane, N-n-butyl-3-aminopropylmethyldimethoxysilane, N-n-butyl-1-aminomethyltriethoxysilane, N-n-butyl-1-aminomethylmethyldimethoxysilane, N-n-butyl-1-aminomethyltrimethoxysilane, N-n-butyl-1-aminomethylmethyltriethoxysilane, benzyl-3-aminopropyltrimethoxysilane, benzyl-3-aminopropyltriethoxysilane, benzyl-2-aminoethyl-3-aminopropyltrimethoxysilane, benzyl-2-aminoethyl-3-aminopropyltriethoxysilane, diaminoethylene-3-propyltrimethoxysilane, diaminoethylene-3-propyltriethoxysilane, triaminodiethylene-3-propyltrimethoxysilane, triaminodiethylene-3-propyltriethoxysilane, (2-aminoethylamino)ethyltrimethoxysilane, (2-aminoethylamino)ethyltriethoxysilane, (1-aminoethylamino)methyltrimethoxysilane and (1-aminoethylamino)methyltriethoxysilane, preference being given especially to di- and/or triaminoalkoxysilanes.

11. Process according to any of Claims 1 to 10, **characterized in that** the acrylic anhydride of the formula IV is methacrylic anhydride or (unsubstituted) acrylic anhydride.

12. Process according to any of Claims 1 to 11, **characterized in that** the molar ratio of the nitrogen atoms in the aminoalkyl-functional alkoxysilanes of the formula I to the molar ratio of the acryloylcarbonyl function released from the acrylic anhydride of the formula IV is in the range from 1:5 to 5:1, especially 1:2 to 2:1, preferably 1:1.5 to 1.5:1, more preferably 1:1 with a range of variation of plus/minus 0.5, preferably 0.2.

13. Process according to any of Claims 1 to 12, **characterized in that**
the acrylic acid is not removed in the case of reaction of aminoalkyl-functional silanes of the formula I with secondary and/or tertiary nitrogen atoms.

14. Process according to any of Claims 1 to 13, wherein
- in a step (I), an aminoalkyl-functional alkoxysilane of the formula I is converted with
- addition of a defined amount of acrylic anhydride of the formula IV and
- under temperature control and
- acrylic acid is removed in step (II).

15. Process according to any of Claims 1 to 14, **characterized in that** the acrylic acid is removed by means of distillation, formation of an insoluble compound or chromatography, especially flash chromatography, or is masked by addition of a complexing agent.

16. Process according to any of Claims 1 to 15, **characterized in that** the reaction is effected in the presence of an anhydrous aprotic or organic protic solvent or solvent mixture, with at least one solvent forming insoluble compounds with the acrylic acid.

17. Process according to any of Claims 1 to 16, **characterized in that** the acrylamidoalkyl-functional silanes correspond to the general formula V
(R¹O)_{3-a-b}(R²)ₐSi(C)_{1+b} (V)
where R¹ is independently a linear, branched or cyclic alkyl group having 1 to 8 carbon atoms, especially having 1, 2, 3 or 4 carbon atoms, or acryloylcarbonyl such as
-(CO)R⁴C=CR⁵H, R² is independently a linear, branched or cyclic alkyl group having 1 to 8 carbon atoms, and the group C is an acrylamidoalkyl-functional group, with a independently 0 or 1, b independently 0, 1 or 2, b preferably being 0.

18. Process according to Claim 17, **characterized in that** the group C is selected from
-(CH₂)_{c}-[(NH)(CH₂)_{d}]ₑ[(NH)(CH₂)_{f}]_{g}NH₍₁₋ₕ₎R³ₕ-(CO) CR⁴=CHR⁵,
- (CH₂)ⱼ-NH(CH₂-CH₂-NH)-(CO)CR⁴=CHR⁵ and
- (CH₂)ⱼ-NH₂₋ₚ(CH₂-CH₂-NH- (CO) CR⁴=CHR⁵)ₚ,
where c, d, e, f, g, h, j, p and R³, R⁴, R⁵ are each as defined above.

19. Formulation comprising a process product according to any of Claims 1 to 18 and at least one further formulation constituent selected from auxiliary, polymer, especially silane-terminated polyurethane, diluent, additive, pigment, acid, base or buffer.

## Revendications

1. Procédé de fabrication de silanes à fonction acrylamidoalkyle et de mélanges de ceux-ci, selon lequel :
- un alcoxysilane à fonction aminoalkyle de la formule I ou un mélange comprenant au moins deux silanes de la formule I :
(R¹O) 3-a-b(R²)ₐSi(B)_{1+b} (I)
le groupe B dans la formule I correspondant indépendamment à un groupe de la formule II :
-(CH₂)_{c}-[(NH)(CH₂)_{d}]ₑ[(NH)(CH₂)_{f}]_{g}NH₍₂₋ₕ₎R³ₕ (II),
dans la formule I, R¹ représentant indépendamment un groupe alkyle linéaire, ramifié ou cyclique de 1 à 8 atomes C, notamment de 1, 2, 3 ou 4 atomes C, R² représentant indépendamment un groupe alkyle linéaire, ramifié ou cyclique de 1 à 8 atomes C et, dans la formule II, R³ représentant indépendamment un groupe alkyle, aryle ou alkylaryle linéaire, ramifié ou cyclique de 1 à 8 atomes C et, dans la formule I, a représentant indépendamment 0 ou 1, b représentant indépendamment 0, 1 ou 2, dans la formule II, c étant choisi indépendamment parmi 1, 2, 3, 4, 5 et 6, d étant choisi indépendamment parmi 1, 2, 3, 4, 5 et 6, e étant choisi indépendamment parmi 0, 1, 2, 3, 4, 5 et 6, f étant choisi indépendamment parmi 1, 2, 3, 4, 5 et 6, g étant choisi indépendamment parmi 0, 1, 2, 3, 4, 5 et 6, et h étant choisi indépendamment parmi 0 ou 1, ou le groupe B dans la formule I correspondant à un groupe de la formule III :
-(CH₂)ⱼ-NH₂₋ₚ(CH₂-CH₂-NH₂)ₚ (III)
avec j = 1, 2 ou 3, et p = 0, 1 ou 2,
est mis en réaction
- avec un anhydride de l'acide acrylique de la formule IV :
(CHR⁵=CR⁴CO)₂O (IV)
R⁴ représentant indépendamment un atome d'hydrogène ou un groupe méthyle, et R⁵ représentant indépendamment un atome d'hydrogène ou un groupe méthyle,
la réaction ayant lieu à une teneur en solvant ou diluant dans la composition totale inférieure ou égale à 1,5 % en poids et dans une plage de température définie sans la présence d'un stabilisateur,
- et de l'acide acrylique et/ou des produits de réaction de l'acide acrylique sont éventuellement éliminés.

2. Procédé selon la revendication 1, **caractérisé en ce que** la réaction a lieu à une température inférieure à 80 °C, notamment inférieure à 50 °C, de préférence inférieure à 45 °C, de préférence inférieure à 40 °C, de manière particulièrement préférée inférieure à 35 °C.

3. Procédé selon la revendication 1 ou 2, **caractérisé en ce que** la réaction a lieu à une teneur en solvant ou diluant dans la composition totale inférieure ou égale à 0,5 % en poids, de préférence inférieure ou égale à 0,1 % en poids.

4. Procédé selon l'une quelconque des revendications 1 à 3, **caractérisé en ce que** la réaction a lieu dans une plage de température définie inférieure à 50 °C, sans la présence d'un stabilisateur.

5. Procédé selon l'une quelconque des revendications 1 à 4, **caractérisé en ce que** la réaction a lieu en présence d'un solvant anhydre aprotique ou organique protique à une température inférieure à 40 °C.

6. Procédé selon la revendication 1, **caractérisé par** un alcoxysilane à fonction aminoalkyle de la formule I avec R¹ représentant indépendamment méthyle ou éthyle, et avec a = 0 et b = 0, avec c = 1, 2 ou 3, et avec le groupe B selon la formule II avec g = 0 et e = 1 et h = 0, d = 2.

7. Procédé selon la revendication 1, **caractérisé par** un alcoxysilane à fonction aminoalkyle de la formule I avec R¹ représentant indépendamment méthyle ou éthyle, et avec a = 0 et b = 0, avec c = 3, et avec le groupe B selon la formule II avec g, e et h représentant chacun 0, ou selon une variante, avec a = 0, b = 0, c = 3, et avec le groupe B selon la formule II avec e = 1, d = 2 et avec g = 0, h = 0, ou avec le groupe B selon la formule II avec e = g = 0 ou 1, et d = f = 2 ou 3, et h = 0 avec c = 3, ou avec le groupe B selon la formule III avec j = 3 et p = 1 ou 2.

8. Procédé selon la revendication 1, **caractérisé par** un alcoxysilane à fonction aminoalkyle de la formule I avec R¹ représentant indépendamment méthyle ou éthyle et avec a = 0 et b = 0 avec c = 2 et avec le groupe B selon la formule II avec g, e et h représentant chacun 0, ou selon une variante, avec a = 0, b = 0, c = 3, et avec le groupe B selon la formule II avec e = 1, d = 2 et avec g = 0, h = 0, ou avec le groupe B selon la formule II avec e = g = 0 ou 1, et d = f = 2 ou 3, et h = 0 avec c = 2, ou avec le groupe B selon la formule III avec j = 3 et p = 1 ou 2.

9. Procédé selon la revendication 1, **caractérisé par** un alcoxysilane à fonction aminoalkyle de la formule I avec R¹ représentant indépendamment méthyle ou éthyle et avec a = 0 et b = 0 avec c = 1 et avec le groupe B selon la formule II avec g, e et h représentant chacun 0, ou selon une variante, avec a = 0, b = 0, c = 3, et avec le groupe B selon la formule II avec e = 1, d = 2 et avec g = 0, h = 0, ou avec le groupe B selon la formule II avec e = g = 0 ou 1, et d = f = 2 ou 3, et h = 0 avec c = 1, ou avec le groupe B selon la formule III avec j = 3 et p = 1 ou 2.

10. Procédé selon la revendication 1 ou les revendications 6 à 9, **caractérisé en ce que** le silane à fonction aminoalkyle de la formule I est choisi parmi le 3-aminopropyltriméthoxysilane, le 3-aminopropyltriéthoxysilane, le 3-aminopropylméthyldiméthoxysilane, le 3-aminpropylméthyldiéthoxysilane, le 1-aminométhyltriméthoxysilane, le 1-aminométhyltriéthoxysilane, le 2-aminoéthyltriméthoxysilane, le 2-aminoéthyltriéthoxysilane, le 3-aminoisobutyltriméthoxysilane, le 3-aminoisobutyltriéthoxysilane, le N-n-butyl-3-aminopropyltriéthoxysilane, le N-n-butyl-3-aminopropylméthyldiéthoxysilane, le N-n-butyl-3-aminopropyltriméthoxysilane, le N-n-butyl-3-aminopropylméthyldiméthoxysilane, le N-n-butyl-1-aminométhyltriéthoxysilane, le N-n-butyl-1-aminométhylméthyldiméthoxysilane, le N-n-butyl-1-aminométhyltriméthoxysilane, le N-n-butyl-1-aminométhylméthyltriéthoxysilane, le benzyl-3-aminopropyltriméthoxysilane, le benzyl-3-aminopropyltriéthoxysilane, le benzyl-2-aminoéthyl-3-aminopropyltriméthoxysilane, le benzyl-2-aminoéthyl-3-aminopropyltriéthoxysilane, le diaminoéthylène-3-propyltriméthoxysilane, le diaminoéthylène-3-propyltriéthoxysilane, le triaminodiéthylène-3-propyltriméthoxysilane, le triaminodiéthylène-3-propyltriéthoxysilane, le (2-aminoéthylamino)-éthyltriméthoxysilane, le (2-aminoéthylamino)-éthyltriéthoxysilane, le (1-aminoéthylamino)-méthyltriméthoxysilane et le (1-aminoéthylamino)-méthyltriéthoxysilane, les di- et/ou triaminoalcoxysilanes étant notamment préférés.

11. Procédé selon l'une quelconque des revendications 1 à 10, **caractérisé en ce que** l'anhydride de l'acide acrylique de la formule IV est l'anhydride de l'acide méthacrylique ou l'anhydride de l'acide acrylique (non substitué).

12. Procédé selon l'une quelconque des revendications 1 à 11, **caractérisé en ce que** le rapport molaire des atomes d'azote des alcoxysilanes à fonction aminoalkyle de la formule I au rapport molaire de la fonction acrylcarbonyle libérée à partir de l'anhydride de l'acide acrylique de la formule IV se situe dans la plage allant de 1 sur 5 à 5 sur 1, notamment de 1 sur 2 à 2 sur 1, de préférence de 1 sur 1,5 à 1,5 sur 1, de manière particulièrement préférée d'environ 1 sur 1 avec une marge de fluctuation de plus/moins 0,5, de préférence 0,2.

13. Procédé selon l'une quelconque des revendications 1 à 12, **caractérisé en ce que** l'acide acrylique n'est pas éliminé lors de la réaction de silanes à fonction aminoalkyle de la formule I avec des atomes d'azote secondaires et/ou tertiaires.

14. Procédé selon l'une quelconque des revendications 1 à 13, selon lequel
- lors d'une étape (I), un alcoxysilane à fonction aminoalkyle de la formule I est mis en réaction avec
- ajout d'une quantité définie d'anhydride de l'acide acrylique de la formule IV et
- régulation de la température, et
- à l'étape (II), l'acide acrylique est éliminé.

15. Procédé selon l'une quelconque des revendications 1 à 14, **caractérisé en ce que** l'acide acrylique est éliminé par distillation, formation d'un composé insoluble ou chromatographie, notamment chromatographie flash, ou masqué par ajout d'un complexant.

16. Procédé selon l'une quelconque des revendications 1 à 15, **caractérisé en ce que** la réaction a lieu en présence d'un solvant anhydre aprotique ou organique protique ou d'un mélange de solvants, au moins un solvant formant des composés insolubles avec l'acide acrylique.

17. Procédé selon l'une quelconque des revendications 1 à 16, **caractérisé en ce que** les silanes à fonction acrylamidoalkyle correspondent à la formule générale V :
(R¹O)_{3-a-b}(R²)ₐSi(C)_{1+b} (V)
dans laquelle R¹ représente indépendamment un groupe alkyle linéaire, ramifié ou cyclique de 1 à 8 atomes C, notamment de 1, 2, 3 ou 4 atomes C, ou un acrylcarbonyle, tel que -(CO)R⁴C=CR⁵H, R² représente indépendamment un groupe alkyle linéaire, ramifié ou cyclique de 1 à 8 atomes C, et le groupe C représente un groupe à fonction acrylamidoalkyle, avec a représentant indépendamment 0 ou 1, b représentant indépendamment 0, 1 ou 2, de préférence avec b représentant 0.

18. Procédé selon la revendication 17, **caractérisé en ce que** le groupe C est choisi parmi :
-(CH₂)_{c}-[(NH)(CH₂)_{d}]ₑ[(NH)(CH₂)_{f}]_{g}NH₍₁₋ₕ₎R³ₕ-(CO)CR⁴=CHR⁵,
- (CH₂)ⱼ-NH(CH₂-CH₂-NH)-(CO)CR⁴=CHR⁵ et
- (CH₂)ⱼ-NH₂₋ₚ(CH₂-CH₂-NH-(CO)CR⁴=CHR⁵)ₚ,
c, d, e, f, g, h, j, p, ainsi que R³, R⁴ et R⁵ étant tels que définis précédemment.

19. Formulation comprenant un produit de procédé selon l'une quelconque des revendications 1 à 18, ainsi qu'au moins un constituant de formulation supplémentaire choisi parmi un adjuvant, un polymère, notamment un polyuréthane à terminaison silane, un diluant, un additif, un pigment, un acide, une base ou un tampon.
